# EUROPEAN PATENT APPLICATION

(11) **EP 4 398 360 A1**
(43) Date of publication of application: **10.07.2024**
(21) Application number: 22864087.6
(22) Date of filing: 20.07.2022
(51) Int. Cl.: H01M 10/052, H01M 4/134, H01M 4/62, H01M 10/0567

(54) **NON-AQUEOUS ELECTROLYTE SECONDARY BATTERY**

(30) Priority: 31.08.2021 JP 2021141955
(71) Applicant: Panasonic Intellectual Property Management Co., Ltd., Osaka-shi, Osaka 571-0057 (JP)
(72) Inventor: OKAZAKI, Tomohisa, Kadoma-shi, Osaka 571-0057 (JP)
(74) Representative: Novagraaf International SA
(86) International application number: PCT/JP2022/028224
(87) International publication number: WO 2023/032499

(57) **Abstract**

A nonaqueous electrolyte secondary battery includes a positive electrode, a negative electrode, and a nonaqueous electrolyte. The positive electrode includes a positive electrode current collector, and a positive electrode mixture layer supported on the positive electrode current collector. The negative electrode includes a negative electrode current collector, and a negative electrode mixture layer supported on the negative electrode current collector. The negative electrode mixture layer includes a negative electrode active material capable of absorbing and releasing lithium ions, and negative-electrode-side carbon nanotubes. The positive electrode mixture layer includes a positive electrode active material capable of absorbing and releasing lithium ions, and positive-electrode-side carbon nanotubes. The expansion rate during charging of the negative electrode is 10% or more.

## Description

### [Technical Field]

The present disclosure relates to a nonaqueous electrolyte secondary battery.

### [Background Art]

Nonaqueous electrolyte secondary batteries represented by lithium-ion secondary batteries are used as power supplies for electronic devices such as mobile terminals, power sources for vehicles such as electric cars, and the like. Graphite is usually used as a negative electrode active material for nonaqueous electrolyte secondary batteries.

In recent years, with respect to nonaqueous electrolyte secondary batteries, the use of a negative electrode active material whose capacity density (capacity per unit mass) is larger than that of graphite has been examined. As such a negative electrode active material, for example, a material containing silicon (Si-containing material) has been examined.

Furthermore, in order to increase the electrode active material amount per electrode unit area, it has been examined to compress the electrode with high pressure to increase the active material density.

On the other hand, Patent Literature 1 (Examples 2 and 6) discloses a nonaqueous electrolyte secondary battery including artificial graphite as a negative electrode active material, in which vapor-grown carbon fibers (VGCFs) are contained in each of the positive electrode mixture layer and the negative electrode mixture layer.

### [Citation List]

### [Patent Literature]

Patent Literature 1: Japanese Laid-Open Patent Publication No. 2009-43715

### [Summary of Invention]

### [Technical Problem]

An electrode with high active material density is susceptible to the influence of expansion and contraction during charging and discharging. For example, the electrical conductivity is lost due to the damage to electrically conductive paths, or the flowability or liquid permeability of nonaqueous electrolyte is impaired, tending to cause a loss of durability of the battery. In particular, the negative electrode expands and contracts greatly, from and into which the nonaqueous electrolyte is pushed out excessively during charging, and the nonaqueous electrolyte is absorbed excessively during discharging, and thus, the amount of nonaqueous electrolyte in the positive electrode may be reduced. Therefore, the capacity tends to decrease with repeated charging and discharging, and the cycle characteristics tend to degrade.

VGCFs have relatively high rigidity, and an electrode containing VGCFs is less susceptible to the influence of expansion and contraction during charging and discharging, but the electrode containing VGCFs is hardly compressed, and it is difficult to highly increase the active material density. When an electrode containing VGCFs is compressed excessively, the conductive paths may be broken due to a rupture of the VGCFs.

### [Solution to Problem]

In view of the above, one aspect of the present disclosure relates to a nonaqueous electrolyte secondary battery, including: a positive electrode; a negative electrode; and a nonaqueous electrolyte, wherein the positive electrode includes a positive electrode current collector, and a positive electrode mixture layer supported on the positive electrode current collector, the negative electrode includes a negative electrode current collector, and a negative electrode mixture layer supported on the negative electrode current collector, the negative electrode mixture layer includes a negative electrode active material capable of absorbing and releasing lithium ions, and negative-electrode-side carbon nanotubes, the positive electrode mixture layer includes a positive electrode active material capable of absorbing and releasing lithium ions, and positive-electrode-side carbon nanotubes, and an expansion rate during charging of the negative electrode is 10% or more.

### [Advantageous Effects of Invention]

According to the present disclosure, with respect to a nonaqueous electrolyte secondary battery, it is possible to realize higher capacity and improvement in cycle characteristics at the same time.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

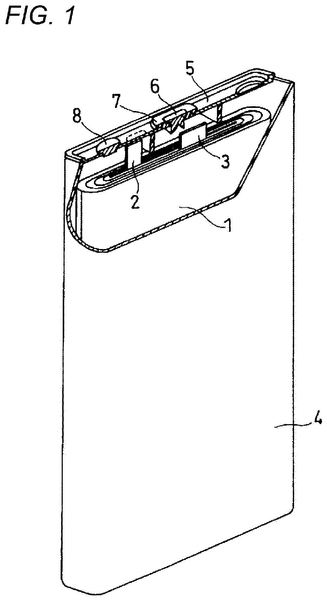

[FIG. 1] A partially cut-away schematic oblique view of a nonaqueous electrolyte secondary battery according to one embodiment of the present disclosure.

### [Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

A nonaqueous electrolyte secondary battery according to one embodiment of the present disclosure includes a positive electrode, a negative electrode, and a nonaqueous electrolyte. The positive electrode includes a positive electrode current collector, and a positive electrode mixture layer supported on the positive electrode current collector. The negative electrode includes a negative electrode current collector, and a negative electrode mixture layer supported on the negative electrode current collector. The negative electrode mixture layer includes a negative electrode active material capable of absorbing and releasing lithium ions, and negative-electrode-side carbon nanotubes. The positive electrode mixture layer includes a positive electrode active material capable of absorbing and releasing lithium ions, and positive-electrode-side carbon nanotubes. Hereinafter, carbon nanotubes are sometimes referred to as "CNTs". The expansion rate during charging of the negative electrode is 10% or more. The negative electrode includes a negative electrode active material (hereinafter sometimes referred to as a first negative electrode active material) whose capacity density (capacity per unit mass) is larger than that of a carbon material (graphite).

When the expansion rate during charging of the negative electrode is 10% or more, the capacity density of the negative electrode increases, but typically, the cycle characteristics tend to degrade. Including CNTs in each of the negative electrode mixture layer and the positive electrode mixture layer, however, can make it possible to achieve higher capacity while maintaining the cycle characteristics. This is presumably because, by the CNTs, the conductivity of the positive and negative electrodes can be significantly increased, and the flowability or liquid permeability of the nonaqueous electrolyte (liquid electrolyte) can be improved. The effect by the CNTs of improving the flowability or liquid permeability of the nonaqueous electrolyte is can be remarkable presumably because the conductivities of the positive and negative electrodes are increased to a certain level or higher.

The following points are presumed as the factors that enable the improvement in the flowability (or liquid permeability) of the nonaqueous electrolyte by the CNTs. CNTs have a high aspect ratio and can provide electrical conductivity without crushing the voids within the mixture layer. Furthermore, CNTs can easily follow the expansion and contraction of the active material (esp. the first negative electrode active material) during charging and discharging, and are hard to break, and therefore, even though the negative electrode expands and contracts, the flowability of nonaqueous electrolyte and the conductive paths can be maintained in favorable conditions.

Therefore, in the negative electrode mixture layer containing CNTs, the nonaqueous electrolyte is unlikely to be excessively pushed out from the negative electrode mixture layer due to expansion of the first negative electrode active material during charging. Moreover, the excessive absorbing of the nonaqueous electrolyte into the negative electrode mixture layer due to contraction of the first negative electrode active material during discharging is suppressed. In the positive electrode mixture layer containing CNTs, the nonaqueous electrolyte is unlikely to be excessively pushed out from the positive electrode mixture layer due to pushing of the positive electrode mixture layer by the negative electrode mixture layer having expanded during charging. Moreover, the decrease in the amount of nonaqueous electrolyte in the positive electrode mixture layer due to excessive absorption of nonaqueous electrolyte into the negative electrode mixture layer during discharging is suppressed.

Furthermore, the rigidity of CNTs is low, and a mixture layer containing CNTs is easily compressed. By compressing the mixture layer to increase the density of the active material, higher capacity can be easily achieved. The density of the positive electrode mixture layer containing CNTs can be increased to, for example, 3.3 g/cm³ or more (or 3.5 g/cm³ or more).

From the foregoing, with respect to a nonaqueous electrolyte secondary battery, it is possible to realize higher capacity and improvement in cycle characteristics at the same time.

The expansion rate during charging of the negative electrode containing the first negative electrode active material may be 15% or more, and may be 18% or more. The capacity density of the first negative electrode active material is larger than that of a later-described carbon material (e.g., graphite), and the degree of expansion and contraction the first negative electrode active material is greater than that of the carbon material. Examples of the first negative electrode active material include an active material containing Si (Si-containing material). For example, when the negative electrode active material includes SiOₓ as the Si-containing material, the expansion rate during charging of the negative electrode is 18%. On the other hand, when the negative electrode active material does not include the first negative electrode active material but includes graphite, the above expansion rate is 7%.

The expansion rate (%) during charging of the negative electrode is a value calculated by the following formula. Expansion rate during expansion of negative electrode = {(negative electrode thickness during changing - negative electrode thickness during discharge) / negative electrode thickness during discharging} × 100

The negative electrode thickness during charging can be determined by disassembling a fully charged battery, to take out the negative electrode, and measuring the thicknesses at randomly selected 10 points of the negative electrode, followed by calculating an average value thereof. The negative electrode thickness during discharging is determined by disassembling a fully discharged battery to take out the negative electrode, in a similar manner to the above. Note that a fully charged battery means a battery with a state of charge (SOC) of 90% or more. A fully discharged battery means a battery before the first charge or a battery with a depth of discharge (DOD) of 90% or more.

### (Carbon nanotubes)

CNTs are a carbon material having a nano-sized diameter and having a structure in which a sheet of a six-membered ring network formed of carbon atoms (graphene) is wound in a tubular shape, and have excellent conductivity. When the number of graphene layers constituting the tubular structure is one, the nanotubes are called single-walled CNTs (SWCNTs: single-walled carbon nanotubes). When the number of the above layers is more than one, the nanotubes are called multi-walled CNTs (MWCNTs: multi-walled carbon nanotubes). The CNTs can be confirmed by, for example, a SEM image of a cross section of the mixture layer. As a method for analyzing the CNTs, for example, Raman spectroscopy, thermogravimetric analysis method, and the like can be used.

In view of improving the cycle characteristics, the average diameters of the positive-electrode-side and the negative-electrode-side CNTs may be 20 nm or less, preferably 5 nm or less, may be 1 nm or more and 20 nm or less, and may be 1 nm or more and 5 nm or less. When the average diameter of CNTs is 5 nm or less, the CNTs can be easily interposed between the active material (e.g., Si-containing material) and its surrounding active material, and the CNTs can more easily form contact points with the active material (e.g., Si-containing material) and its surrounding active material. Furthermore, even in a small amount, the effect of adding CNTs is likely to be obtained. When the average diameter of CNTs is 1 nm or more, the strength of the CNTs is sufficiently ensured, and thus, conductive paths are easily formed between the active material (e.g., Si-containing material) and its surrounding active material, and the conductive paths are likely to be maintained during charging and discharging.

When the average diameter of CNTs is 5 nm or less, the CNTs can contain SWCNTs abundantly. For example, when the average diameter of CNTs is 5 nm or less, the proportion (ratio by the number) of SWCNTs in the CNTs contained in the mixture layer is 1/2 or more.

The proportion of SWCNTs in the CNTs contained in the mixture layer can be determined by the following method.

An image of a surface or cross section of the mixture layer or an image of the CNTs is obtained with an electron microscope. The electron microscope may be a scanning electron microscope (SEM) or a transmission electron microscope (TEM). Using the image, N0 (e.g., about 50 to 200) of CNTs are randomly selected and observed, to determine the number N1 of SWCNTs, and calculate the ratio N1/N0 of the number N1 of SWCNTs to the total number N0 of the selected CNTs.

In view of ensuring the conductive paths between the active material (e.g., Si-containing material) and its surrounding active material, the average lengths of the positive-electrode-side and negative-electrode-side CNTs are preferably 0.5 µm or more, may be preferably 1 µm or more, and may be 0.5 µm or more (or 1 µm or more) and 100 µm or less, more preferably 0.5 µm or more (or 1 µm or more) and 20 µm or less.

The average length and average diameter of CNTs can be determined by obtaining an image of a surface or cross section of the mixture layer or an image of CNTs with a SEM or TEM, and, using the image, randomly selecting a plurality of (e.g., about 50 to 200) CNTs, to measure the lengths and diameters and calculate an average of the lengths and an average of the diameters. The length of CNTs refers to the length when the nanotube is taken as being straight.

CNTs having different average diameters and/or average lengths may be used on the positive electrode side and on the negative electrode side.

CNTs are likely to form contact points with the active material (e.g., Si-containing material) and its surrounding active material, and even with a small amount of CNTs, conductive paths can be efficiently formed. Therefore, the amount of active material can be increased by reducing the amount of CNTs, which is advantageous in terms of achieving higher capacity. Furthermore, in the electrode production, the amount of CNTs included in the electrode slurry can be reduced. When the amount of CNTs in the electrode slurry is small, aggregation of CNTs is suppressed, the reliability of the battery is improved, and stable cycle characteristics are likely to be obtained.

In order to fully obtain the effect by the CNTs and increase the amount of negative electrode active material, the content of the CNTs in the negative electrode mixture layer may be 1.0 parts by mass or less, may be 0.5 parts by mass or less, and may be 0.1 parts by mass or less, relative to 100 parts by mass of the negative electrode active material (sum of the first and second negative electrode active materials). The content of the CNTs in the negative electrode mixture layer may be 0.001 parts by mass or more, and may be 0.01 parts by mass or more, relative to 100 parts by mass of the negative electrode active material (sum of the first and second negative electrode active materials). The range of the content of the CNTs in the negative electrode mixture layer may be any combination of the above upper and lower limits.

In order to fully obtain the effect by the CNTs and increase the amount of positive electrode active material, the content of the CNTs in the positive electrode mixture layer may be 1.0 parts by mass or less, may be 0.5 parts by mass or less, and may be 0.1 parts by mass or less, relative to 100 parts by mass of the positive electrode active material.

In order to fully obtain the effect by the CNTs and reduce the resistance of the positive electrode mixture layer, the content of the CNTs in the positive electrode mixture layer may be 0.01 parts by mass or more, and may be 0.05 parts by mass or more, relative to 100 parts by mass of the positive electrode active material. In this case, the resistance of the positive electrode mixture layer can be reduced to 30 Ω·cm or less (or 20 Ω·cm or less). The range of the content of the CNTs in the positive electrode mixture layer may be any combination of the above upper and lower limits.

The resistance of the positive electrode mixture layer is measured using a positive electrode taken out by disassembling an initial battery in a state of full discharge (depth of discharge of 90% or more) (in a state where lithium ions are absorbed in the positive electrode active material). A positive electrode used in the battery production may be used for the measurement. The measurement is performed, in a 25 °C environment, using an electrode resistance measurement system (product name "RM2610", available from Hioki E.E. Corporation).

### (First negative electrode active material)

The first negative electrode active material preferably includes a Si-containing material. The Si-containing material preferably includes a composite material including a lithium-ion conductive phase (matrix) and a fine silicon phase dispersed in the lithium-ion conductive phase. The lithium-ion conductive phase preferably includes at least one selected from the group consisting of a SiO₂ phase, a silicate phase, and a carbon phase. The lithium-ion conductive phase can form an amorphous phase. The stress generated due to expansion and contraction of the silicon phase during charging and discharging is relaxed by the lithium-ion conductive phase, and in this point, the composite material is advantageous for improving cycle characteristics. Examples of the Si-containing material include a composite material including a SiO₂ phase and a silicon phase dispersed therein, a composite material including a silicate phase and a silicon phase dispersed therein, and a composite material including a carbon phase and a silicon phase dispersed therein.

The SiO₂ phase is an amorphous phase containing 95 mass% or more of silicon dioxide. A composite material in which silicon particles are dispersed in the SiO₂ phase is represented by SiOₓ, where x is, for example, 0.5 ≤ x < 2, and may be 0.8 ≤ x ≤ 1.6. The SiOₓ can be obtained by, for example, heat-treating silicon monoxide, to separate it into a SiO₂ phase and a fine Si phase through disproportionation reaction.

The silicate phase preferably contains at least one of an alkali metal element (a Group I element other than hydrogen in the long form of periodic table) and a Group II element in the long form of periodic table. The alkali metal element includes lithium (Li), potassium (K), sodium (Na), and the like. The Group II element includes magnesium (Mg), calcium (Ca), strontium (Sr), barium (Ba), and the like. The lithium silicate phase may have a composition represented by a formula: Li_{2y}SiO_{2+y}, where 0 < y < 2. The y may be 1/2, and may be 1. The composite material in which silicon particles are dispersed in the silicate phase can be obtained by, for example, pulverizing a mixture of silicate and raw silicon under stirring in a ball mill or the like, into fine particles, and then, heat-treating the mixture in an inert atmosphere.

The average particle diameter of the silicon phase (before initial charging) in the form of fine particles dispersed in the silicate phase may be 50 nm or more and 500 nm or less, and may be 100 nm or more and 400 nm or less. The average particle diameter of the silicon phase is obtained by calculating an average value of the maximum diameters of randomly selected 100 silicon phases, using a SEM image of a cross section of the composite material. The content of the silicon phase dispersed in the silicate phase may be 30 mass% or more and 95 mass% or less, and may be 35 mass% or more and 75 mass% or less, relative to the whole composite material.

The carbon phase includes, for example, amorphous carbon with low crystallinity. The amorphous carbon, for example, may be graphitizable carbon (hard carbon), and may be non-graphitizable carbon (soft carbon). A composite material in which silicon particles are dispersed in the carbon phase can be obtained by, for example, pulverizing a mixture of a carbon source and raw material silicon under stirring in a ball mill or the like, into fine particles, and then, heat-treating the mixture in an inert atmosphere. As the carbon source, for example, saccharides such as carboxymethyl cellulose (CMC), water-soluble resins such as polyvinylpyrrolidone, and the like are used.

The composition of the Si-containing material can be determined by, for example, obtaining a backscattered electron image of a cross section of the negative electrode mixture layer with a field emission-scanning electron microscope (FE-SEM), and observing the particles of the Si-containing material, followed by performing elemental analysis on the observed particles of the Si-containing material. For the elemental analysis, for example, an electron beam microanalyzer (EPMA) or the like is used. The above analysis can also determine the composition of the lithium-ion conductive phase.

The Si-containing material is, for example, a particulate material. The average particle diameter (D50) of the Si-containing material is, for example, 1 µm or more and 25 µm or less, preferably 4 µm or more and 15 µm or less. Within the above range, favorable battery performance is likely to be obtained. In the present specification, the average particle diameter (D50) means a particle diameter at 50% cumulative volume (volume average particle diameter) in a particle size distribution measured by a laser diffraction and scattering method. For the measuring apparatus, for example, "LA-750", available from Horiba, Ltd. (HORIBA) can be used.

In view of improving the conductivity, at least part of the particle surfaces of the Si-containing material may be coated with a conductive layer. The conductive layer includes a conductive material, such as conductive carbon. The coating amount of the conductive layer is, for example, 1 part by mass or more and 10 parts by mass or less per 100 parts by mass of the sum of the Si-containing material particles and the conductive layer. The Si-containing material particles having a conductive layer on their surfaces can be obtained by, for example, mixing coal pitch or the like with Si-containing material particles, and heat-treating the mixture in an inert atmosphere.

### (Second negative electrode active material)

The negative electrode mixture layer may include, together with the first negative electrode active material, a second negative electrode active material whose expansion rate during charging is less than 10%. As the second negative electrode active material, a carbon material or the like that electrochemically absorbs and releases lithium ions is used. The degree of expansion and contraction during charging and discharging of the carbon material is smaller than that of the Si-containing material. By using a Si-containing material and a carbon material in combination, the contacts between the negative electrode active material particles and between the negative electrode mixture layer and the negative electrode current collector can be maintained in a more favorable state, during repeated charging and discharging. That is, while imparting a high capacity of the Si-containing material to the negative electrode, the cycle characteristics can be improved.

Examples of the carbon material used for the second negative electrode active material include graphite, graphitizable carbon (soft carbon), and non-graphitizable carbon (hard carbon). The carbon material may be used singly or in combination of two or more kinds.

In particular, the carbon material is preferably graphite, in terms of its excellent stability during charging and discharging and its small irreversible capacity. Examples of the graphite include natural graphite, artificial graphite, and graphitized mesophase carbon particles. The graphite particles may partially contain amorphous carbon, graphitizable carbon, and/or non-graphitizable carbon.

Graphite is a carbon material with a developed graphite-like crystal structure. The interplanar spacing d002 of the (002) plane of the graphite measured by the X-ray diffractometry may be, for example, 0.340 nm or less, and may be 0.3354 nm or more and 0.340 nm or less. The crystallite size Lc (002) of the graphite may be, for example, 5 nm or more, and may be 5 nm or more and 200 nm or less. The crystallite size Lc (002) is measured by, for example, the Scherrer method. When the interplanar spacing d002 of the (002) plane and the crystallite size Lc (002) of the graphite are within the above ranges, a high capacity is likely to be obtained.

A Si-containing material and a carbon material may be used for the first negative electrode active material and the second negative electrode active material, respectively. In this case, in view of achieving higher capacity and improving cycle characteristics, the proportion of the Si-containing material in the sum of the Si-containing material and the carbon material is preferably 2 mass% or more, more preferably 2 mass% or more and 30 mass% less, further more preferably 3 mass% or more and 25 mass% or less.

A detailed description will be given below of the nonaqueous electrolyte secondary battery.

### (Negative electrode)

The negative electrode includes a negative electrode current collector and a negative electrode mixture layer supported on a surface of the negative electrode current collector. The negative electrode mixture layer can be formed by applying a negative electrode slurry of a negative electrode mixture dispersed in a dispersion medium, onto a surface of the negative electrode current collector, followed by drying. The applied film after drying may be rolled as necessary. The negative electrode mixture layer may be formed on one or both surfaces of the negative electrode current collector.

The negative electrode mixture contains, as essential components, a negative electrode active material and CNTs. The negative electrode mixture can contain, as optional components, a conductive agent other than CNTs, a binder, and the like.

Examples of the conductive agent other than CNTs include: carbons, such as acetylene black; and metals such as aluminum. The conductive agent may be used singly or in combination of two or more kinds.

The binder may be, for example, a resin material. Examples of the resin material used as the binder include: fluorocarbon resins, such as polytetrafluoroethylene and polyvinylidene fluoride (PVDF); polyolefin resins, such as polyethylene and polypropylene; acrylic resins, such as polyacrylic acid; polyamide resins, such as aramid resin; and polyimide resins, such as polyimide and polyamide imide. As the binder, a rubbery material, such as styrene-butadiene copolymer rubber (SBR), may also be used.

Furthermore, as the binder, carboxymethylcellulose (CMC) and modified products thereof (including salts such as Na salt), cellulose derivatives such as methylcellulose (e.g., cellulose ether), and the like can be used. The binder may be used singly or in combination of two or more kinds.

Examples of the dispersion medium include, but are not particularly limited to, water, alcohols such as ethanol, ethers such as tetrahydrofuran, amides such as dimethylformamide, N-methyl-2-pyrrolidone (NMP), and mixed solvents thereof.

The negative electrode current collector may be a non-porous electrically conductive substrate (e.g., metal foil), a porous electrically conductive substrate (e.g., mesh, net, punched sheet), and the like. The material of the negative electrode current collector may be, for example, stainless steel, nickel, a nickel alloy, copper, a copper alloy, or the like. The thickness of the negative electrode current collector, although not particularly limited to, may be 1 to 50 µm, and may be 5 to 20 µm.

### (Positive electrode)

The positive electrode includes a positive electrode current collector and a positive electrode mixture layer supported on a surface of the positive electrode current collector. The positive electrode mixture layer can be formed by applying a positive electrode slurry of a positive electrode mixture dispersed in a dispersion medium, such as NMP, onto a surface of the positive electrode current collector, followed by drying. The applied film after drying may be rolled as necessary. The positive electrode mixture layer may be formed on one or both surface of the positive electrode current collector. The positive electrode mixture contains, as essential components, a positive electrode active material and CNTs, and can contain, as optional components, a binder, a conductive agent other than CNTs, and the like.

As the positive electrode active material, for example, a lithium-containing transition metal oxide is used. Examples of the transition metal element contained in the lithium-containing transition metal oxide include Sc, Ti, V, Cr, Mn, Fe, Co, Ni, Cu, Y, Zr, and W. The lithium-containing transition metal oxide may contain one kind of transition metal element, and may contain two or more kinds thereof. The transition metal element may be Co, Ni and/or Mn. The lithium-containing transition metal oxide can contain one or more kinds of typical elements as necessary. Examples of the typical element include Mg, Al, Ca, Zn, Ga, Ge, Sn, Sb, Pb, and Bi. The typical element may be Al.

Among lithium-containing transition metal oxides, a composite oxide containing Co, Ni, and/or Mn as transition metal elements, optionally containing Al, and having a rock-salt type crystal structure with a layered structure is preferred in terms of obtaining high capacity.

Examples of the lithium-containing transition metal oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, and LiₐMn_{2-b}M_{b}O₄. Here, a = 0 to 1.2, b = 0 to 0.9, and c = 2.0 to 2.3. M is at least one selected from the group consisting of Na, Mg, Sc, Y, Mn, Fe, Co, Ni, Cu, Zn, Al, Cr, Pb, Sb and B. Note that the value a indicating the molar ratio of lithium increases or decreases during charging and discharging.

The positive electrode active material may be a composite oxide represented by LiₐNi_{b}M_{1-b}O₂, where 0 < a ≤ 1.2, 0.3 ≤ b ≤ 1, and M is at least one selected from the group consisting of Mn, Co, and Al. In view of achieving higher capacity, 0.85 ≤ b ≤ 1 is more preferred. In view of the stability of the crystal structure, the positive electrode active material may be a composite oxide represented by LiₐNi_{b}Co_{c}Al_{d}CO₂, where 0 < a ≤ 1.2, 0.85 ≤ b < 1, 0 < c ≤ 0.15, 0 < d ≤ 0.1, and b+c+d = 1.

As the binder, the resin materials exemplified for the negative electrode can be used. As the conductive agent, ones similar to those exemplified for the negative electrode can be used. The conductive agent may be graphite, such as natural graphite and artificial graphite.

The form and the thickness of the positive electrode current collector may be respectively selected from the forms and the range corresponding to those of the negative electrode current collector. The material of the positive electrode current collector may be, for example, stainless steel, aluminum, an aluminum alloy, titanium, or the like.

### (Nonaqueous electrolyte)

The nonaqueous electrolyte includes a nonaqueous solvent and a lithium salt dissolved in the nonaqueous solvent. The concentration of the lithium salt in the nonaqueous electrolyte is, for example, 0.5 mol/L or more and 2 mol/L or less. By setting the lithium salt concentration in the above range, a nonaqueous electrolyte having excellent ion conductivity and appropriate viscosity can be obtained. However, the lithium salt concentration is not limited to the above.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

As the lithium salt, for example, LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, imides, and like can be used. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). The lithium salt may be used singly or in combination of two or more kinds.

The nonaqueous electrolyte may contain, as an additive, a phosphoric acid salt and/or a fluorinated carbonic acid ester. Examples of the phosphoric acid salt include lithium difluorophosphate. Examples of the fluorinated carbonic acid ester include fluorinated cyclic carbonic acid ester, such as fluoroethylene carbonate (FEC). By including the additive in the nonaqueous electrolyte, a film containing a component derived from the additive is formed on the surface of the positive electrode active material, which can suppress the deterioration of the positive electrode active material due to side reactions between the positive electrode active material and the nonaqueous electrolyte. Moreover, the film has low resistance, and the increase in resistance of the positive electrode mixture layer can be suppressed. As a result, the cycle characteristics can be further improved. The content of the additive in the nonaqueous electrolyte is, for example, 2 mass% or less, relative to the whole nonaqueous electrolyte.

### (Separator)

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

The nonaqueous electrolyte secondary battery, for example, has a structure in which an electrode group formed by winding the positive electrode and the negative electrode with the separator interposed therebetween is housed in an outer case, together with the nonaqueous electrolyte. The wound electrode group may be replaced with a different form of electrode group, for example, a stacked electrode group formed by stacking the positive electrode and the negative electrode with the separator interposed therebetween. The nonaqueous electrolyte secondary battery may be in any form, such as cylindrical type, prismatic type, coin type, button type, or laminate type.

The structure of a prismatic nonaqueous electrolyte secondary battery as an example of the nonaqueous electrolyte secondary battery according to the present disclosure will be described below with reference to FIG. 1. FIG. 1 is a schematic partially cut-away oblique view of a nonaqueous electrolyte secondary battery according to one embodiment of the present disclosure.

The battery includes a bottomed prismatic battery case 4, and an electrode group 1 and a nonaqueous electrolyte (not shown) housed in the battery case 4. The electrode group 1 has a long negative electrode, a long positive electrode, and a separator interposed between the positive electrode and the negative electrode and preventing them from directly contacting with each other. The electrode group 1 is formed by winding the negative electrode, the positive electrode, and the separator around a flat plate-like winding core, and then removing the winding core.

To the negative electrode current collector, a negative electrode lead 3 is attached at its one end, by means of welding or the like. The other end of the negative electrode lead 3 is electrically connected, via an insulating plate made of resin (not shown), to a negative electrode terminal 6 disposed at a sealing plate 5. The negative electrode terminal 6 is electrically insulated from the sealing plate 5 by a resin gasket 7. To the positive electrode current collector, a positive electrode lead 2 is attached at its one end, by means of welding or the like. The other end of the positive electrode lead 2 is connected, via the insulating plate, to the back side of the sealing plate 5. That is, the positive electrode lead 2 is electrically connected to the battery case 4 serving as a positive electrode terminal. The insulating plate provides insulation between the electrode group 1 and the sealing plate 5 and between the negative electrode lead 3 and the battery case 4. The periphery of the sealing plate 5 is fitted to the opening end of the battery case 4, and the fitted portion is laser-welded. In this way, the opening of the battery case 4 is sealed with the sealing plate 5. A nonaqueous electrolyte injection port provided in the sealing plate 5 is closed with a sealing plug 8.

### [Examples]

Examples of the present disclosure will be more specifically described below, but the present disclosure is not limited to the following Examples.

### «Examples 1 to 4»

### [Production of negative electrode]

An appropriate amount of water was added to a negative electrode mixture, and mixed, to obtain a negative electrode slurry. The negative electrode mixture used here was a mixture of a negative electrode active material, a negative electrode conductive agent, sodium carboxymethyl cellulose (CMC-Na), and styrene butadiene rubber (SBR). The added amount of CMC-Na was 1 part by mass per 100 parts by mass of the negative electrode active material. The added amount of SBR was 1.5 parts by mass per 100 parts by mass of the negative electrode active material.

As the negative electrode active material, a mixture of a Si-containing material and graphite (average particle diameter (D50) 25 µm) was used. In the negative electrode active material, the mass ratio between the Si-containing material and the graphite was set to the values shown in Table 1.

As the Si-containing material, SiOₓ particles (x = 1, average particle size (D50) 5 µm) coated with a conductive layer containing a conductive carbon were used. The coating amount of the conductive layer was set to 5 parts by mass per 100 parts by mass of the sum of the SiOₓ particles and the conductive layer.

As the negative electrode conductive agent, CNTs1 (average diameter 10 nm, average length 0.5 µm) or CNTs2 (average diameter 3 nm, average length 10 µm) were used. In the CNTs1, the proportion (ratio by the number) of MWCNTs in the whole CNTs was 9/10 or more. In the CNTs2, the proportion (ratio by the number) of SWCNTs in the whole CNTs was 9/10 or more.

The added amount of the negative electrode conductive agent (amount per 100 parts by mass of negative electrode active material) was set to the values shown in Table 1.

Next, the negative electrode slurry was applied onto a surface of a copper foil, and the applied film was dried, followed by rolling, to form a negative electrode mixture layer (thickness 80 µm, density 1.6 g/cm³) on each of both surfaces of the copper foil. A negative electrode was thus obtained.

### [Production of positive electrode]

An appropriate amount of N-methyl-2-pyrrolidone (NMP) was added to a positive electrode mixture and mixed, to obtain a positive electrode slurry. The positive electrode mixture used here was a mixture of a lithium-containing composite oxide (LiNi_{0.8}Co_{0.18}Al_{0.02}O₂) as a positive electrode active material, a positive electrode conductive agent, and polyvinylidene fluoride (PVDF). The added amount of PVDF was 2.5 parts by mass per 100 parts by mass of the positive electrode active material.

As the positive electrode conductive agent, the CNTs1 or the CNTs2 were used. The added amount of the positive electrode conductive agent (amount per 100 parts by mass of positive electrode active material) was set to the values shown in Table 1.

Next, the positive electrode slurry was applied onto a surface of an aluminum foil, and the applied film was dried, followed by rolling, to form a positive electrode mixture layer (thickness 95 µm, density 3.6 g/cm³) on each of both surfaces of the aluminum foil. A positive electrode was thus obtained.

### [Preparation of nonaqueous electrolyte]

LiPF₆ was dissolved at a concentration of 1.0 mol/L in a mixed solvent of ethylene carbonate (EC) and dimethyl carbonate (DMC) (volume ratio 3:7), to obtain a nonaqueous electrolyte.

### [Production of nonaqueous electrolyte secondary battery]

A positive electrode lead made of Al was attached to the positive electrode obtained above, and a negative electrode lead made of Ni was attached to the negative electrode obtained above. In an inert gas atmosphere, the positive electrode and the negative electrode were spirally wound, with a polyethylene thin film (separator) interposed therebetween, to form a wound electrode group. The electrode group was housed in a pouch-like outer body formed of a laminate sheet including an Al layer, into which the nonaqueous electrolyte was injected, and then, the outer body was sealed, to complete a nonaqueous electrolyte secondary battery. When the electrode group was housed in the outer body, part of the positive electrode lead and part of the negative electrode lead were exposed outside from the outer body.

In Table 1, A1 to A4 are nonaqueous electrolyte secondary batteries of Examples 1 to 4.

### <<Example 5>>

To the nonaqueous electrolyte, lithium difluorophosphate and fluoroethylene carbonate (FEC) were further added as additives. The content of lithium difluorophosphate was set to 1 mass% relative to the whole nonaqueous electrolyte. The content of FEC was set to 5 mass% relative to the whole nonaqueous electrolyte. Except for the above, in the same manner as the battery A4 of Example 4, a battery A5 of Example 5 was produced.

### <<Comparative Example 1>>

The graphite was used in the negative electrode active material, and the Si-containing material was not used. The CNTs1 as the negative electrode conductive agent were not added. Instead of the CNsT1 as the positive electrode conductive agent, carbon black was added in an amount of 0.8 parts by mass per 100 parts by mass of the positive electrode active material. Except for the above, in the same manner as the battery Al of Example 1, a battery B1 of Comparative Example 1 was produced.

### <<Comparative Example 2>>

A battery B2 of Comparative Example 2 was produced in the same manner as the battery A2 of Example 2, except that the graphite was used in the negative electrode active material, and the Si-containing material was not used.

### <<Comparative Example 3>>

The CNTs1 as the negative electrode conductive agent were not added. Instead of the CNTs1 as the positive electrode conductive agent, carbon black was added in an amount of 0.8 parts by mass per 100 parts by mass of the positive electrode active material. Except for the above, in the same manner as the battery A1 of Example 1, a battery B3 of Comparative Example 3 was produced.

### <<Comparative Example 4>>

A battery B4 of Comparative Example 4 was produced in the same manner as the battery A2 of Example 2, except that, instead of the CNTs1 as the positive electrode conductive agent, carbon black was added in an amount of 0.8 parts by mass per 100 parts by mass of the positive electrode active material.

### <<Comparative Example 5>>

A battery B5 of Comparative Example 5 was produced in the same manner as the battery A2 of Example 2, except that the CNTs1 as the negative electrode conductive agent were not added.

Each of the batteries produced above was evaluated for the following properties.

### [Evaluation 1: Initial capacity]

### (Charging)

A constant-current charging was performed at 0.2C (1000 mA) until the voltage reached 4.2 V, and then, a constant-voltage charging was performed at 4.2 V until the current reached 0.02C (100 mA).

### (Discharging)

A constant-current discharging was performed at 0.5C (2500 mA) until the voltage reached 2.5 V The time taken for this discharge was measured, to determine a discharge capacity (initial capacity). The rest time between charging and discharging was set to 10 min. The charging and discharging were performed in a 25 °C environment.

### [Evaluation 2: Cycle capacity retention ratio]

### (Charging)

A constant-current charging was performed at 0.5C (2500 mA) until the voltage reached 4.2 V, and then, a constant-voltage charging was performed at 4.2 V until the current reached 0.02C (100 mA).

### (Discharging)

A constant-current discharging was performed at 1,0C (5000 mA) until the voltage reached 2.5 V The rest time between charging and discharging was set to 20 min. The charging and discharging were performed in a 25 °C environment.

Charging and discharging were repeated under the above conditions. The ratio (percentage) of a discharge capacity at the 400th cycle to a discharge capacity at the 1st cycle was calculated as a cycle capacity retention rate.

The evaluation results are shown in Table 1. In Table 1, the resistance of the positive electrode mixture layer determined by the already-described method using the positive electrode produced above is also shown. The expansion rate during charging of the negative electrode was 18% in the negative electrodes used in A1 to A4 and B3 to B5 including a Si-containing material as the negative electrode active material, and was 7% in the negative electrode used in B 1 and B2 including graphite only as the negative electrode active material.

**[Table 1]**

| battery number | negative electrode active material blending ratio | | positive electrode conductive agent | | negative electrode conductive agent | | positive electrode mixture layer resistance | nonaqueous electrolyte additive | evaluation | |
|---|---|---|---|---|---|---|---|---|---|---|
| | Si-containing material | graphite | kind | added amount per 100 pts.mass of active material | kind | added amount per 100 pts.mass of active material | | | initial capacity | retention rate at 400^{th} cycle |
| | (pts.mass) | (pts.mass) | | (pts.mass) | | (pts.mass) | (Ω·cm) | | (mAh) | (%) |
| B1 | 0 | 100 | without | - | without | - | 31 | without | 4000 | 93.5 |
| B2 | 0 | 100 | CNTs1 | 0.5 | CNTs1 | 0.5 | 13 | without | 4000 | 93.5 |
| B3 | 6 | 94 | without | - | without | - | 31 | without | 5000 | 68.8 |
| B4 | 6 | 94 | without | - | CNTs1 | 0.5 | 31 | without | 5000 | 68.9 |
| B5 | 6 | 94 | CNTs1 | 0.5 | without | - | 13 | without | 5000 | 69.0 |
| A1 | 6 | 94 | CNTs1 | 0.1 | CNTs1 | 0.5 | 36 | without | 5000 | 70.4 |
| A2 | 6 | 94 | CNTs1 | 0.5 | CNTs1 | 0.5 | 13 | without | 5000 | 77.4 |
| A3 | 6 | 94 | CNTs2 | 0.05 | CNTs1 | 0.5 | 20 | without | 5000 | 77.9 |
| A4 | 6 | 94 | CNTs2 | 0.05 | CNTs2 | 0.05 | 20 | without | 5000 | 83.1 |
| A5 | 6 | 94 | CNTs2 | 0.05 | CNTs2 | 0.05 | 20 | with | 5000 | 84.2 |

In B1 and B2 in which only graphite was used as the negative electrode active material, the initial capacity was reduced. In B2, despite the addition of CNTs in the positive and negative electrodes, almost no improvement in the capacity retention rate was observed as compared to B1.

In B3 in which graphite was used together with a Si-containing material as the negative electrode active material, the initial capacity was improved, but due to no addition of CNTs in the positive and negative electrodes, the capacity retention rate was significantly reduced.

In B4 in which a Si-containing material was used, although the same amount of CNTs were added in the negative electrode as in A2, no CNTs were added in the positive electrode, and therefore, almost no improvement in capacity retention was observed as compared to B3. In B5 in which a Si-containing material was used, although the same amount of CNTs were added in the positive electrode as in A2, no CNTs were added in the negative electrode, and therefore, almost no improvement in capacity retention was observed as compared to B3.

In A2 in which a Si-containing material was used, CNTs were added in both the negative electrode and the positive electrode, and therefore, the capacity retention rate was significantly improved as compared to B3.

A1 and A2 exhibited a high initial capacity and a high capacity-retention rate, but in A2, in which the added amount of CNTs was larger than in A1, the improvement in the capacity retention rate was remarkable. In A2, the resistance of the positive electrode mixture layer was 30 Ω·cm cm or less.

A2 to A4 all exhibited a high capacity-retention rate. In A2, the CNTs1 were added in the positive and negative electrodes. In A3, the CNTs2 were added in the positive electrode and the CNTs1 were added in the negative electrode. In A4, the CNTs2 were added in the positive and negative electrodes. Comparison among them showed the relationship of A2 < A3 < A4, in terms of the capacity retention rate. This indicates that when using the CNTs2, the improvement in the capacity retention rate can be more remarkable. With the CNTs2, even in a small amount, the effect by adding CNTs was more remarkable.

In A5, which had the same configuration as A4 except that an additive was added in the nonaqueous electrolyte, the capacity retention rate was further improved than in A4.

### [Industrial Applicability]

The nonaqueous electrolyte secondary battery according to the present disclosure is useful as a main power source for mobile communication equipment, portable electronic equipment, and other devices.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A nonaqueous electrolyte secondary battery, comprising: a positive electrode; a negative electrode; and a nonaqueous electrolyte, wherein
the positive electrode includes a positive electrode current collector, and a positive electrode mixture layer supported on the positive electrode current collector,
the negative electrode includes a negative electrode current collector, and a negative electrode mixture layer supported on the negative electrode current collector,
the negative electrode mixture layer includes a negative electrode active material capable of absorbing and releasing lithium ions, and negative-electrode-side carbon nanotubes,
the positive electrode mixture layer includes a positive electrode active material capable of absorbing and releasing lithium ions, and positive-electrode-side carbon nanotubes, and
an expansion rate during charging of the negative electrode is 10% or more.

2. The nonaqueous electrolyte secondary battery according to claim 1, wherein the negative electrode active material includes a Si-containing material.

3. The nonaqueous electrolyte secondary battery according to claim 1 or 2, wherein a resistance of the positive electrode mixture layer is 30 Ω·cm or less.

4. The nonaqueous electrolyte secondary battery according to any one of claims 1 to 3, wherein a density of the positive electrode mixture layer is 3.3 g/cm³ or more.

5. The nonaqueous electrolyte secondary battery according to any one of claims 1 to 4, wherein the positive-electrode-side carbon nanotubes have an average diameter of 20 nm or less, and an average length of 0.5 µm or more.

6. The nonaqueous electrolyte secondary battery according to any one of claims 1 to 5, wherein the negative-electrode-side carbon nanotubes have an average diameter of 20 nm or less, and an average length of 0.5 µm or more.

7. The nonaqueous electrolyte secondary battery according to any one of claims 1 to 6, wherein a content of the positive-electrode-side carbon nanotubes in the positive electrode is 1 part by mass or less, relative to 100 parts by mass of the positive electrode active material.

8. The nonaqueous electrolyte secondary battery according to any one of claims 1 to 7, wherein a content of the negative-electrode-side carbon nanotubes in the negative electrode is 1 part by mass or less, relative to 100 parts by mass of the negative electrode active material.

9. The nonaqueous electrolyte secondary battery according to any one of claims 1 to 8, wherein the nonaqueous electrolyte includes fluoroethylene carbonate.
